(19) Europäisches Patentamt / European Patent Office / Office européen des brevets

(11) **EP 2 558 761 B1**

(12) **FASCICULE DE BREVET EUROPEEN**

(45) Date de publication et mention
de la délivrance du brevet:
**14.05.2014  Bulletin 2014/20**

(21) Numéro de dépôt: **11715969.9**

(22) Date de dépôt: **22.03.2011**

(51) Int Cl.:
*F16L 9/04* (2006.01)     *F16L 9/147* (2006.01)
*F16L 9/18* (2006.01)     *F16L 53/00* (2006.01)
*F17D 1/18* (2006.01)     *F16L 1/20* (2006.01)

(86) Numéro de dépôt international:
**PCT/FR2011/050602**

(87) Numéro de publication internationale:
**WO 2011/128545 (20.10.2011 Gazette 2011/42)**

(54) **CONDUITE POUR LE TRANSPORT D'UN FLUIDE COMPRENANT UN HYDROCARBURE, ET PROCEDE DE FABRICATION D'UNE TELLE CONDUITE**

LEITUNG FÜR DEN TRANSPORT EINER FLÜSSIGKEIT MIT EINEM KOHLENWASSERSTOFF UND VERFAHREN ZUR HERSTELLUNG EINER DERARTIGEN LINIE

PIPE FOR TRANSPORTING A FLUID CONTAINING A HYDROCARBON, AND METHOD FOR PRODUCING SUCH A LINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **14.04.2010   FR 1052843**

(43) Date de publication de la demande:
**20.02.2013   Bulletin 2013/08**

(73) Titulaire: **Total S.A.**
**92400 Courbevoie (FR)**

(72) Inventeurs:
• **BIGEX, Thibaud**
**F-64018 Pau Cedex (FR)**
• **WOIRIN, Jérome**
**F-64018 Pau Cedex (FR)**

(74) Mandataire: **Cabinet Plasseraud**
**52, rue de la Victoire**
**75440 Paris Cedex 09 (FR)**

(56) Documents cités:
EP-A1- 2 009 338        CN-Y- 2 436 761
CN-Y- 201 354 918       FR-A1- 2 873 952
US-A1- 2006 196 568

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention est relative aux conduites pour le transport d'un fluide comprenant un hydrocarbure.

De telles conduites sont maintenant couramment utilisées dans des environnements très froid, à terre comme en mer, et parfois en mer à de très grande profondeur. Dans ces conditions le fluide peut soit se congeler, soit se coaguler, soit présenter la formation de paraffine. Ces transformations du fluide peuvent générer des bouchons et entraver le transport du fluide dans la conduite. C'est pourquoi ces conduites sont parfois chauffées pour éviter ces inconvénients. Une technique connue est le chauffage électrique de ces conduites par des lignes conductrices en cuivre placées sur les tubes.

Les documents CN2436761-Y et CN201354918-Y décrivent des conduites pour le transport d'un hydrocarbure ayant une couche en fibre de carbone adaptée pour être alimentée électriquement pour réchauffer la conduite. Le dernier document dévoile le préambule de la revendication 1.

Ces conduites utilisant des fibres de carbone comme conducteur électrique permettent de chauffer le fluide plus efficacement que les lignes conductrices en cuivre.

La présente invention a pour but de perfectionner ce dernier type de conduites. On cherche notamment à améliorer leur résistance à une pression externe.

Une conduite pour le transport d'un fluide comprenant un hydrocarbure selon un mode de réalisation de l'invention comprend :

- un tube interne creux s'étendant selon une direction longitudinale et destiné à transporter ledit fluide dans le tube interne, ledit tube interne ayant au moins une surface externe électriquement isolante,
- une couche de chauffage sur le tube interne, et comprenant des fibres de carbone noyées dans un matériau polymère,
- une couche d'isolation thermique autour de la couche de chauffage,
- un tube externe autour de la couche d'isolation thermique, ledit tube externe étant adapté pour résister à une pression externe au moins supérieure à 100 bars,
- des moyens d'espacement placés entre le tube interne et le tube externe pour maintenir fixement le tube externe à distance du tube interne, et
- des moyens d'alimentation électrique destinés à amener un courant électrique à ladite couche de chauffage, ledit courant électrique circulant dans ladite couche de chauffage pour chauffer le tube interne.

Grâce à ces dispositions, notamment par le fait d'utiliser un tube externe autour de la couche d'isolation thermique et des moyens d'espacement, la conduite peut résister à une pression externe élevée, supérieure à 100 bars, de sorte qu'une telle conduite est utilisable en offshore à grande profondeur.

Dans divers modes de réalisation de la conduite selon l'invention, on peut éventuellement avoir recours en outre à l'une et/ou à l'autre des dispositions suivantes :

- le tube externe comprend des fibres de carbone noyées dans un matériau polymère ;
- les fibres de carbone de la couche de chauffage sont enroulées autour du tube interne avec un premier angle prédéterminé adapté pour obtenir une résistance électrique de ladite couche de chauffage, et
- les fibres de carbone du tube externe sont enroulées autour du tube interne avec au moins un deuxième angle prédéterminé adapté pour obtenir une résistance mécanique dudit tube externe ;
- les moyens d'espacement comprennent une charge de renfort noyée dans un matériau polymère, lesdits moyens d'espacement étant formés sur le tube interne et la couche de chauffage ;
- les moyens d'alimentation électrique comprennent un élément de connexion venant en contact avec au moins une surface de contact sensiblement transversale ou partiellement inclinée, et située à proximité d'une extrémité de la couche de chauffage dans la direction longitudinale.

L'invention est également relative à un procédé de fabrication d'une conduite pour le transport d'un fluide comprenant un hydrocarbure, ladite conduite comprenant un tube interne creux s'étendant selon une direction longitudinale et destiné à transporter ledit fluide dans le tube interne, ledit tube interne ayant au moins une surface externe électriquement isolante, ledit procédé comprenant au moins les étapes suivantes :

- formation d'une couche de chauffage sur le tube interne, ladite couche de chauffage comprenant des fibres de carbone noyées dans un matériau polymère,
- mise en place d'une couche d'isolation thermique autour de la couche de chauffage,
- mise en place de moyens d'espacement,
- mise en place d'un tube externe autour de la couche d'isolation thermique, ledit tube externe étant adapté pour résister à une pression externe au moins supérieure à 100 bars, et lesdits moyens d'espacement étant placés entre le tube interne et le tube externe pour maintenir fixement le tube externe à distance du tube interne, et
- mise en place de moyens d'alimentation électrique destinés à amener un courant électrique à ladite couche de chauffage, ledit courant électrique circulant dans ladite couche de chauffage pour chauffer le tube interne.

Dans divers modes de réalisation du procédé de fabrication de la conduite selon l'invention, on peut éventuellement avoir recours en outre à l'une et/ou à l'autre des dispositions suivantes :

- la formation de la couche de chauffage est réalisée en enroulant des fibres de carbone autour du tube interne avec un premier angle prédéterminé adapté pour obtenir une résistance électrique de ladite couche de chauffage ;
- les moyens d'espacement comprennent une charge de renfort noyée dans un matériau polymère, et lesdits moyens d'espacement sont formés directement sur le tube interne et la couche de chauffage après la formation de la couche de chauffage ;
- le tube externe est formé à partir de fibres de carbone noyées dans un matériau polymère, directement sur les moyens d'espacement ;
- le tube externe est formé en enroulant autour des moyens d'espacement et de la couche d'isolation thermique, des fibres de carbone avec au moins un deuxième angle prédéterminé adapté pour obtenir une résistance mécanique dudit tube externe.

D'autres caractéristiques et avantages de l'invention apparaîtront au cours de la description suivante d'un de ses modes de réalisation, donné à titre d'exemple non limitatif, en regard des dessins joints.

Sur les dessins :

- la figure 1a est une vue en coupe longitudinale d'une conduite selon l'invention,
- la figure 1b est une vue transversale de coté de la conduite de la figure 1a,
- la figure 2 est une vue agrandie d'une variante de la couche de chauffage de la conduite de la figure 1,
- la figure 3 est une vue en coupe longitudinale d'une extrémité de la conduite de la figure 1 et montrant les moyens d'alimentation et d'assemblage.

Sur les différentes figures, les mêmes références désignent des éléments identiques ou similaires.

La direction longitudinale mentionnée dans cette description doit s'entendre comme la direction allant dans la direction X désignée sur les figures. Une direction transversale mentionnée dans cette description doit s'entendre comme la direction Y ou Z désignée sur les figures. Ces directions ne sont mentionnées que pour aider la lecture et la compréhension de l'invention.

Le terme « conduite » de la présente invention doit être compris comme étant un dispositif comprenant un tube pour transporter un fluide au moins entre une entrée et une sortie, le dispositif pouvant comporter d'autres éléments, tel qu'une vanne, ou des dérivations multiples.

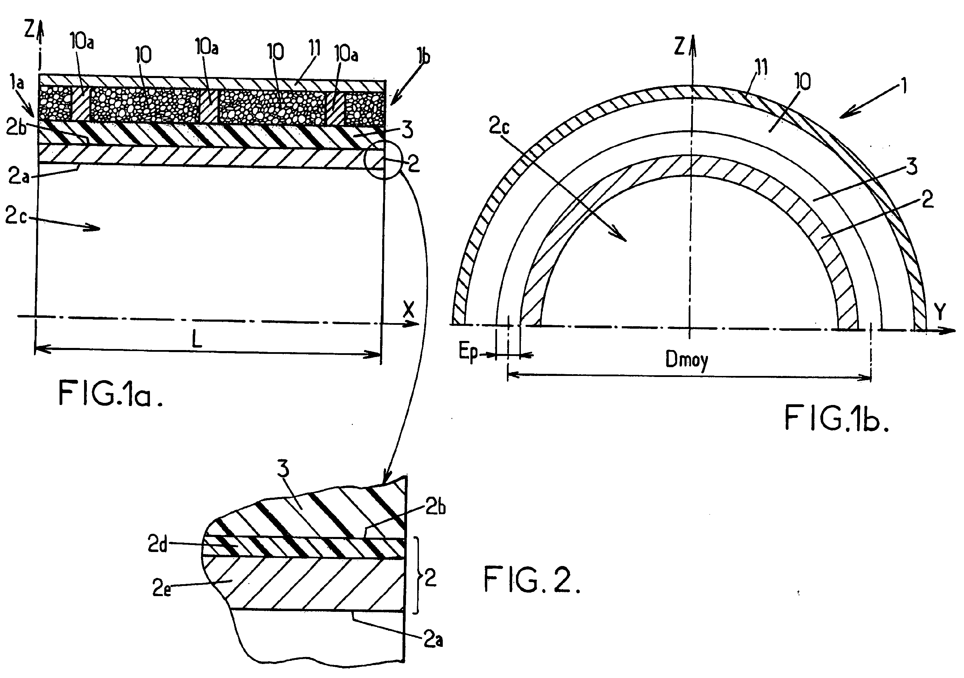

Les figures 1a et 1b présentent une conduite 1 selon l'invention en coupe longitudinale selon un plan XZ et en coupe transversale selon un plan YZ. Dans ces figures seul une moitié supérieure au dessus de l'axe X est présentée, l'autre moitié inférieure étant sensiblement identique par symétrie par rapport à l'axe X.

La conduite 1 comprend un tube interne 2 creux, s'étendant dans la direction longitudinale d'axe X entre une première et deuxième extrémité (1a, 1b) de la conduite. Ce tube interne 2 comprend une surface interne 2a à proximité de l'axe X, et une surface externe 2b plus éloignée de l'axe X. A l'intérieur de la surface interne 2a s'étend une cavité 2c entre une entrée et une sortie de la cavité situées à chacune des extrémités. La cavité 2c est adapté pour transporter le fluide entre lesdites entrée et sortie.

La figure 1b montre que la conduite 1 a une forme sensiblement cylindrique, mais d'autres formes pourraient être réalisées.

Le tube interne 2 peut être réalisé avec un matériau électriquement isolant, par exemple un polymère. Ce matériau peut avantageusement être un polyamide (PA), ou un polyfluorure de vinylidène (PVDF).

Ce tube interne 2 peut également être réalisé avec un matériau électriquement conducteur, tel que de l'acier. Dans ce cas, il comprendra au moins à sa surface externe 2b une couche d'isolation électrique 2d visible en **figure 2,** par exemple constituée d'un des polymères cités ci-dessus, ou d'un composite comprenant des fibres de verre ou de kevlar noyées dans un matériau polymère du même type que cité ci-dessus. Cette couche d'isolation électrique 2d a une épaisseur dans une direction transversale, par exemple comprise entre 0,5 mm et 10 mm, notamment en fonction de la tension d'alimentation V de la couche de chauffage.

Sur ce tube interne 2 de la conduite 1, on applique au moins une couche de chauffage 3, une couche d'isolation thermique 10, on place ou forme des moyens d'espacements 10a, et on place ou forme un tube externe 11 sur lesdits moyens d'espacement 10a.

La couche de chauffage 3 est un composite comprenant au moins des fibres de carbone noyées dans un polymère. Ce polymère peut avantageusement être un polyamide (PA), ou un polyfluorure de vinylidène (PVDF).

Les fibres de carbone sont aptes à conduire un courant électrique pour chauffer le tube par effet Joule. La résistance électrique **R** d'une telle couche de chauffage 3 entre les premières et deuxième extrémités (1a, 1b) de la conduite peut être calculée de manière approchée par la formule suivante :

$$R = \rho_{fibre} \cdot \frac{L}{\pi . D_{moy} . \cos^2 \alpha . E_p}$$

dans laquelle :

- $\rho_{fibre}$ est une résistivité des fibres de carbone, ayant par exemple pour valeur $\rho_{fibre} = 1{,}9.10^{-5}\ \Omega.m$ à une

température de 20°C, ce qui est sensiblement 1100 fois plus résistif que le cuivre à 20°C,

- **L** est une longueur de la couche de chauffage 3 entre les première et deuxième extrémités (1a, 1b) selon la direction longitudinale X,
- **D_{moy}** est un diamètre moyen de la couche de chauffage 3,
- **Ep** est une épaisseur de la couche de chauffage dans une direction transversale, et
- $\alpha$ est un angle d'inclinaison que forment les fibres de carbone par rapport à la direction de l'axe X.

L'épaisseur $E_p$ et l'angle d'inclinaison **a** permettent, lors du dimensionnement, de définir la résistance électrique de cette couche de chauffage 3, et par conséquent la puissance électrique **P** consommée servant à chauffer le tube 2. Cette puissance électrique **P** est égale à $P=V^2/R$, où **V** est une tension électrique d'alimentation de ladite couche de chauffage 3 entre les première et deuxième extrémités.

L'angle d'inclinaison $\alpha$ peut prendre toute valeur entre 0 degré et 70 degrés. Cependant, pour des raisons de facilités de fabrication et des raisons de risques de délaminage du composite avec une valeur d'angle d'inclinaison faible lors de la flexion de la conduite 1 (par exemple lors de la pose sur le fond marin), cet angle d'inclinaison $\alpha$ sera avantageusement supérieur à 10 degrés.

Pour une plage d'angle d'inclinaison comprise entre 10 degrés et 70 degrés, le coefficient $cos^2\alpha$ varie sensiblement entre 0,12 et 0,97, ce qui signifie que la résistance électrique **R** de la couche de chauffage 3 peut varier sur une très grande plage en définissant uniquement cet angle d'inclinaison $\alpha$ des fibres de carbone.

La couche de chauffage 3 peut être fabriquée par des moyens connus du type présentés dans la publication FR-2 873 952, en utilisant des bandes préformées de composite, chaque bande s'étendant selon une direction principale et comprenant des fibres de carbone noyées dans un polymère, lesdites fibres de carbone étant orientées sensiblement selon ladite direction principale de la bande préformée.

La couche de chauffage 3 peut être réalisée par un empilement de sous-couches, chaque sous-couche comprenant des fibres de carbone inclinées avec un angle d'inclinaison $\alpha_i$ prédéterminé par rapport à la direction longitudinale X. Chaque sous-couche comprend alors des fibres de carbone avec un angle d'inclinaison différent de la sous-couche voisine. Par exemple, chaque sous-couche est formée à l'aide de bandes préformées, tel que explicité ci-dessus. En variante, deux sous-couches successives peuvent avoir des angles d'inclinaison opposés pour former un quadrillage sous forme de losanges vu d'une surface externe de la couche de chauffage 3.

Chaque sous-couche d'indice **i**, a un angle d'inclinaison $\alpha_i$, une épaisseur $E_{pi}$, un diamètre moyen $D_{moyi}$, et possède une résistance électrique élémentaire $R_i$. La résistance électrique élémentaire $R_i$ de chaque sous-couche d'indice **i** peut être calculé par la formule précédente de calcul d'une couche ayant des fibres de carbone selon un seul angle d'inclinaison. La résistance électrique **R** de la couche de chauffage 3 peut alors être calculée par la mise en parallèle des résistances élémentaires $R_i$ de chaque sous-couche, c'est-à-dire par

$$1/R = \sum_i 1/R_i \ .$$

Grâce à l'angle d'inclinaison des fibres de carbone dans la couche de chauffage 3, on peut obtenir une résistance électrique **R** désirée pour le chauffage.

Grâce à cette couche de chauffage 3 comprenant des fibres de carbone bien réparties dans le matériau polymère de cette couche, le chauffage est plus homogène autour du tube 2. En outre, si une ou plusieurs fibres de carbone étaient rompues à un endroit de la conduite, le courant électrique continue à passer. De plus, si on utilise une pluralité de sous-couches avec des angles différents, les fibres de carbone se croisent et sont au moins partiellement en contact mutuel, de sorte que le courant électrique et le chauffage reste homogène dans la couche de chauffage 3. Seule la zone où les fibres sont rompues est alors affectée. Une telle conduite 1 est donc très tolérante aux défauts de fabrication et aux accidents de manipulation pouvant la détériorer localement.

Des moyens d'espacement 10a sont placés périodiquement le long de la conduite 1 dans la direction longitudinale X. Ils ont pour fonction de maintenir fixement le tube externe 11 à distance du tube interne 2 et de protéger la couche d'isolation thermique 10 d'une pression externe élevée à l'extérieur de la conduite 1.

Ils sont par exemple constitués d'éléments annulaires s'étendant radialement depuis la couche de chauffage 3 vers le tube externe 11, sensiblement dans un plan transversal perpendiculaire la direction longitudinale X.

Ces moyens d'espacement 10a peuvent être un composite comprenant une charge de renfort noyée dans un matériau polymère, formés sur le tube interne 2 et la couche de chauffage 3. La charge de renfort peut comprendre des fibres de verre ou de kevlar pour augmenter la résistance mécanique de ces moyens d'espacement.

Alternativement, ils sont constitués d'un ou plusieurs éléments s'étendant longitudinalement et radialement depuis la couche de chauffage 3 vers le tube externe 11. Dans cette disposition, ces moyens d'espacement 10a peuvent être extrudés ou sur le tube interne 2 équipé de la couche de chauffage 3.

La couche d'isolation thermique 10 peut être préformée sous forme de larges bandes de matériaux adaptées à être montée entre ces moyens d'espacement 10a : Chaque bande a sensiblement comme largeur la distance entre chaque moyen d'espacement 10a dans la direction longitudinale X, et comme longueur le périmètre externe de la couche de chauffage 3. Chaque bande de la couche d'isolation 10 est alors montée par enroulement autour de la couche de chauffage 3 entre chaque moyen d'espacement 10a. Les bandes de la couche d'isolation 10 sont par exemple constituées d'un matériau fortement isolant thermiquement, tel qu'une mousse de polyuréthane (PU).

En variante, cette couche d'isolation thermique 10 est injectée par un moyen d'injection dans les cavités délimitées par la couche de chauffage 3, les moyens d'espacement 10a et le tube externe 11. Optionnellement, les moyens d'espacement 10a comprennent des ouvertures en direction longitudinale de telle sorte que les cavités successives communiquent entre-elles, et que le matériau de cette couche d'isolation 10 peut être injecté par ledit moyen d'injection dans toutes les cavités. Dans un tel, cas le matériau de la couche d'isolation 10 est avantageusement une mousse, telle qu'une mousse de polyuréthane (PU).

Le tube externe 11 peut être en acier, ou être un composite comprenant des fibres de carbone et un polymère, tel qu'un polyamide (PA) ou un polyfluorure de vinylidène (PVDF).

Le tube externe 11 peut avantageusement comprendre un composite comprenant au moins une charge de renfort noyée dans un polymère, la charge de renfort comprenant au moins des fibres de carbone. Il est avantageux d'utiliser le même polymère pour la couche de chauffage 3, les moyens d'espacement 10a et le tube externe 11. Le tube interne 2 est en outre avantageusement réalisé avec ce même polymère. La conduite 1 est un composite multicouche comprenant un polymère tel qu'un polyamide (PA) ou un polyfluorure de vinylidène (PVDF). On peut alors réaliser de très grande longueur d'une telle conduite de manière complètement automatisée. Grâce à cette disposition, le coût d'une telle conduite est faible, même si elle comprend un matériau couteux tel que de la fibre de carbone.

Le tube externe 11 peut être fabriqué avec la même technique que pour la couche de chauffage 3. Il pourra comprendre une pluralité de sous-couches, chaque sous-couche comprenant des fibres de carbone inclinées selon un angle d'inclinaison prédéterminé. En outre, chaque sous-couche peut être formée à l'aide de bandes préformées. Additionnellement, l'angle d'inclinaison d'une sous-couche est de valeur opposée à l'angle d'inclinaison d'une sous-couche voisine ou adjacente. L'angle d'inclinaison de ces sous-couches est alors avantageusement compris entre 20 degré et 70 degrés.

Grâce au tube externe 11, la conduite 1 est très rigide, notamment elle peut supporter une pression externe très élevée, par exemple supérieure à 100 bars et préférentiellement supérieure à 200 bars. Pour obtenir, une meilleure résistance à la pression externe, l'angle d'inclinaison sera avantageusement compris entre 60 et 70 degrés, et préférentiellement proche de 65 degrés.

Grâce au tube externe 11, la conduite 1 résiste également à des efforts de compression très élevés. Pour obtenir, une meilleure résistance à la compression ou de traction dans la direction longitudinale X, l'angle d'inclinaison sera avantageusement compris entre 20 et 30 degrés, et préférentiellement proche de 25 degrés.

La conduite 1 résiste également à des efforts de flexion très élevés. Elle peut être enroulée avec un faible rayon de courbure par exemple inférieur à 20 m, et préférentiellement inférieur à 10 m. Un angle d'inclinaison compris entre 50 et 70 degrés sera préféré pour obtenir un rayon de courbure faible. Elle peut alors être utilisée par grand fond marin sans risque pas d'être détériorée lors de sa pose, que cela soit par une technique dite de pose en « S » ou une technique dite de pose en « J », pour lesquelles la conduite forme un ou plusieurs coudes avant de reposer sur le fond marin.

Grâce à l'angle d'inclinaison des fibres de carbone dans le tube externe 11, on peut obtenir une résistance mécanique désirée pour la conduite, en pression, en compression ou traction longitudinale, ou en flexion.

Grâce au tube externe 11 très rigide, le tube interne 2 peut avoir une épaisseur faible et être réalisé avec un matériau moins rigide, c'est-à-dire seulement apte à supporter la fabrication des couches successives sur ledit tube interne 2 et non les contraintes de la pression externe à la conduite 1. La couche de chauffage 3 est alors à une distance faible de la surface interne 2a du tube 2 et le chauffage du fluide transporté est plus efficace. De plus, puissance nécessaire pour chauffer le fluide est plus faible.

Par exemple, un tube de 6 pouces de diamètre (approximativement 15 cm de diamètre), comprenant 54 couches de fibres de carbone noyées dans un polymère Polyamide PA11 avec des premières sous-couches ayant des angles d'inclinaison à +/- 25 degrés, puis des deuxièmes sous-couches ayant des angles de +/- 65 degrés, ces sous-couches représentant une épaisseur de 15 mm, a les caractéristiques mécaniques suivantes : résistance à une pression externe de 245 bar, résistance à une pression interne du fluide de 1500 bar, et résistance à la traction de 550 tonnes.

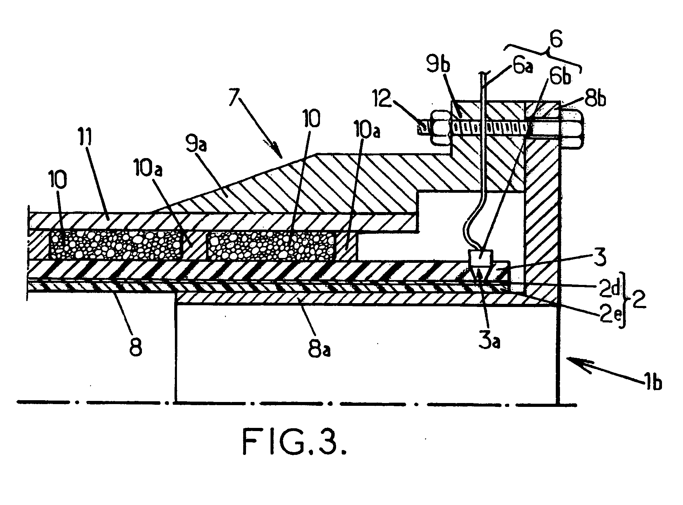

La figure 3 montre un mode de réalisation d'une extrémité 1b de la conduite 1 selon l'invention comprenant :

- des moyens d'alimentation électrique 6 de la couche de chauffage 3 destinés à amener le courant électrique à la couche de chauffage 3, et
- des moyens d'assemblage mécanique 7 de la conduite destinés à la solidariser avec un autre dispositif ou une autre conduite comprenant des moyens d'assemblage identiques ou complémentaires.

Chaque extrémité 1a, 1b de la conduite 1 comprend un moyen d'alimentation électrique, de telle sorte que une tension $V$ appliquée entre ces deux moyens d'alimentation électrique fait circuler un courant électrique $I$

dans la couche de chauffage 3. Par la loi d' Ohm, on a : *I=V/R.*

Les moyens d'alimentation électriques 6 représentés comprennent un câble 6a en relation avec l'extérieur de la conduite 1, et un élément de connexion 6b venant en contact avec les fibres de carbone de la couche de chauffage 3 et connecté audit câble 6a.

Selon une première variante, non représentée, l'élément de connexion 6b est en contact avec les fibres de carbone de la couche de chauffage 3 selon une surface de contact transversale de ladite couche de chauffage 3, ladite surface de contact étant sensiblement perpendiculaire à la direction longitudinale X et située à une extrémité longitudinale de ladite couche de chauffage 3. Cette surface de contact est sensiblement annulaire.

Selon une deuxième variante, représentée en figure 3, l'élément de connexion 6b a une forme en biseau dans une section longitudinale, et pénètre dans une gorge 3a de la couche de chauffage 3 pour venir en contact avec les fibres de carbone de la couche de chauffage 3 selon une surface de contact au moins partiellement inclinée dans ladite gorge 3a. L'élément de connexion 6b et la gorge 3a ont une forme annulaire autour de l'axe longitudinale X. La gorge 3a est située à proximité d'une extrémité de la couche de chauffage dans la direction longitudinale.

Grâce à cette disposition, la surface de contact entre l'élément de connexion 6b et la couche de chauffage 3 est augmentée.

Des moyens d'assemblage 7 sont représentés en figure 3. Ces moyens d'assemblage 7 comprennent par exemple :

- un premier organe 8 solidaire du tube 2, comprenant par exemple une portion longitudinale 8a fixée au tube 2 s'étendant selon la direction longitudinale X, puis une portion radiale 8b s'étendant vers l'extérieur, et
- un deuxième organe 9 comprenant une portion longitudinale 9a montée étanche sur une surface externe de la conduite 1 et une portion radiale fixée sur la portion radiale 8b du premier organe 8 par des moyens de serrage 12, tels que des boulons.

Ces moyens d'assemblage 7 peuvent en outre être adaptés pour maintenir les moyens d'alimentation 6 de la couche de chauffage 3.

La conduite 1 peut comprendre un capteur de température destiné à être connecté à des moyens de contrôle pour réguler le courant électrique dans la couche de chauffage 3.

Le capteur de température peut comprendre une fibre optique adaptée pour mesurer un profil de température le long de la conduite 1 dans la direction longitudinale X. Le moyen de contrôle reçoit alors une pluralité de mesures de températures, chaque mesure correspondant à une position différente le long de la conduite 1 dans la direction longitudinale X.

La fibre optique peut être noyée la couche de chauffage 3.

Avantageusement, le tube interne 2 sera en polymère et le capteur de température ou la fibre optique sera noyée dans ce tube interne 2, de sorte que ce capteur de température mesure au moins une température entre la couche de chauffage 3 et la surface interne 2a du tube 2. Une telle mesure plus proche du fluide donne alors une information plus représentative pour la régulation du moyen de contrôle.

La conduite 1 peut être fabriquée par le procédé suivant.

Ladite conduite comprend un tube interne 2 creux s'étendant selon une direction longitudinale X et destinée à transporter le fluide dans le tube, ledit tube interne 2 ayant au moins une surface externe 2a électriquement isolante.

Le procédé comprend au moins les étapes suivantes :

- formation d'une couche de chauffage 3 sur le tube, ladite couche de chauffage 3 comprenant des fibres de carbone noyées dans un matériau polymère,
- mise en place d'une couche d'isolation thermique 10 autour de la couche de chauffage 3,
- mise en place de moyens d'espacement 10a,
- mise en place d'un tube externe 11 autour de la couche d'isolation thermique 10, ledit tube externe 11 étant adapté pour résister à une pression externe au moins supérieure à 100 bars, et lesdits moyens d'espacement étant placés entre le tube interne 2 et le tube externe 11 pour maintenir fixement le tube externe 11 à distance du tube interne 2, et
- mise en place de moyens d'alimentation électrique 6 destinés à amener un courant électrique à ladite couche de chauffage 3, ledit courant électrique circulant dans ladite couche de chauffage pour chauffer le tube interne.

Le tube 2 peut être formé par extrusion d'une matière de type polymère.

La formation de la couche de chauffage 3 peut être réalisée en enroulant des fibres de carbone autour du tube interne 2 avec un premier angle prédéterminé adapté pour obtenir une résistance électrique de ladite couche de chauffage 3. A cette fin, on utilisera des bandes de composite préformés, enroulés autour du tube interne 2, puis chauffés pour fondre partiellement le polymère et adhérer au tube interne.

Les moyens d'espacement 10a comprennent une charge de renfort noyée dans un matériau polymère. Ils peuvent être formés directement sur le tube interne 2 et la couche de chauffage 3 après la formation de la couche de chauffage 3, par tout procédé, et par exemple moulage, extrusion ou coextrusion.

Le tube externe 11 peut être formé à partir de fibres de carbone noyées dans un matériau polymère, directement sur les moyens d'espacement 10a. On peut également utiliser des bandes de composite préformés, enroulés autour des moyens d'espacement 10a, puis chauffés pour fondre partiellement le polymère et adhérer auxdits moyens d'espacement.

Les fibres de carbone du tube externe sont éventuellement enroulées avec au moins un angle prédéterminé adapté pour obtenir une résistance mécanique du tube externe 11, de telle sorte que ce tube externe résiste à une pression externe, par exemple supérieure à 100 bar, et de préférence supérieure à 200 bars.

Enfin, la conduite 1 peut être réalisée avec un procédé de fabrication en continu dans lequel, le tube interne 2 est extrudé, la couche de chauffage 3 est formée sur le tube, des moyens d'espacement 10a sont extrudés sur la couche de chauffage 3 en formant des cavités longitudinales, un matériau d'isolation thermique est injecté dans ces cavités, et le tube externe 11 est formé sur les moyens d'espacement.

## Revendications

1. Conduite pour le transport d'un fluide comprenant un hydrocarbure, ladite conduite comprenant :

   - un tube interne (2) creux s'étendant selon une direction longitudinale (X) et destiné à transporter ledit fluide dans le tube interne,
   - une couche de chauffage (3) sur le tube interne, et comprenant des fibres de carbone
   - une couche d'isolation thermique (10) autour de la couche de chauffage (3),
   - un tube externe (11) autour de la couche d'isolation thermique (10),
   - des moyens d'alimentation électrique (6) destinés à amener un courant électrique à ladite couche de chauffage (3), ledit courant électrique circulant dans ladite couche de chauffage pour chauffer le tube interne,

   ladite conduite étant **caractérisée en ce que**

   - des moyens d'espacement (10a) sont placés entre le tube interne (2) et le tube externe (11) pour maintenir fixement le tube externe (11) à distance du tube interne (2), **en ce que** ledit tube interne (2) a au moins une surface externe (2b) électriquement isolante, lesdites fibres de carbone sont noyées dans un matériau polymère, **et en ce que** ledit tube externe (11) est adapté pour résister à une pression externe au moins supérieure à 100 bars.

2. Conduite selon la revendication 1, dans laquelle le tube externe (11) comprend des fibres de carbone noyées dans un matériau polymère.

3. Conduite selon la revendication 2, dans laquelle :

   - les fibres de carbone de la couche de chauffage (3) sont enroulées autour du tube interne (2) avec un premier angle prédéterminé adapté pour obtenir une résistance électrique de ladite couche de chauffage (3), et
   - les fibres de carbone du tube externe (11) sont enroulées autour du tube interne (2) avec au moins un deuxième angle prédéterminé adapté pour obtenir une résistance mécanique dudit tube externe (11).

4. Conduite selon l'une des revendications précédentes, dans laquelle les moyens d'espacement (10a) comprennent une charge de renfort noyée dans un matériau polymère, lesdits moyens d'espacement étant formés sur le tube interne (2) et la couche de chauffage (3).

5. Conduite selon l'une des revendications précédentes, dans laquelle les moyens d'alimentation électrique (6) comprennent un élément de connexion (6b) venant en contact avec au moins une surface de contact sensiblement transversale ou partiellement inclinée, et située à proximité d'une extrémité de la couche de chauffage (3) dans la direction longitudinale (X).

6. Procédé de fabrication d'une conduite pour le transport d'un fluide comprenant un hydrocarbure, ladite conduite comprenant un tube interne (2) creux s'étendant selon une direction longitudinale (X) et destiné à transporter ledit fluide dans le tube, ledit tube interne (2) ayant au moins une surface externe (2b) électriquement isolante, ledit procédé comprenant au moins les étapes suivantes :

   - formation d'une couche de chauffage (3) sur le tube interne, ladite couche de chauffage (3) comprenant des fibres de carbone noyées dans un matériau polymère,
   - mise en place d'une couche d'isolation thermique (10) autour de la couche de chauffage (3),
   - mise en place de moyens d'espacement (10a),
   - mise en place d'un tube externe (11) autour de la couche d'isolation thermique (10), ledit tube externe (11) étant adapté pour résister à une pression externe au moins supérieure à 100 bars, et lesdits moyens d'espacement étant placés entre le tube interne (2) et le tube externe (11) pour maintenir fixement le tube externe (11) à distance du tube interne (2), et
   - mise en place de moyens d'alimentation électrique (6) destinés à amener un courant électrique à ladite couche de chauffage (3), ledit courant électrique circulant dans ladite couche de chauffage pour chauffer le tube interne.

7. Procédé selon la revendication 6, dans lequel la formation de la couche de chauffage (3) est réalisée en enroulant des fibres de carbone autour du tube interne (2) avec un premier angle prédéterminé adapté pour obtenir une résistance électrique de ladite couche de chauffage (3).

8. Procédé selon l'une des revendications 6 à 7, dans lequel les moyens d'espacement (10a) comprennent une charge de renfort noyée dans un matériau polymère, et lesdits moyens d'espacement sont formés directement sur le tube interne (2) et la couche de chauffage (3) après la formation de la couche de chauffage (3).

9. Procédé selon l'une des revendications 6 à 8, dans lequel le tube externe (11) est formé à partir de fibres de carbone noyées dans un matériau polymère, directement sur les moyens d'espacement (10a).

10. Procédé selon l'une des revendications 6 à 9, dans lequel le tube externe (11) est formé en enroulant autour des moyens d'espacement (10a) et de la couche d'isolation thermique (10), des fibres de carbone avec au moins un deuxième angle prédéterminé adapté pour obtenir une résistance mécanique dudit tube externe (11).

**Patentansprüche**

1. Leitung für den Transport eines Fluids, das einen Kohlenwasserstoff umfasst, wobei die Leitung Folgendes umfasst:

   - ein hohles inneres Rohr (2), das sich entlang einer Längsrichtung (X) erstreckt und dazu dient, das Fluid im inneren Rohr zu transportieren,
   - eine Heizschicht (3) am inneren Rohr, die Kohlefasern umfasst,
   - eine thermisch isolierende Schicht (10) um die Heizschicht (3),
   - ein äußeres Rohr (11) um die thermisch isolierende Schicht (10),
   - Stromversorgungsmittel (6) zur Zuführung von elektrischem Strom zur Heizschicht (3), wobei der elektrische Strom in der Heizschicht fließt, um das innere Rohr zu erhitzen,

   wobei die Leitung **dadurch gekennzeichnet ist, dass** zwischen dem inneren Rohr (2) und dem äußeren Rohr (11) Beabstandungsmittel (10a) angeordnet sind, um das äußere Rohr (11) fest in einem Abstand zum inneren Rohr (2) zu halten, **dass** das innere Rohr (2) zumindest eine elektrisch isolierende Außenfläche (2b) umfasst, **dass** die Kohlefasern in ein polymeres Material eingebettet sind und dass das äußere Rohr (11) geeignet ist, einem Außendruck von zumindest über 100 bar standzuhalten.

2. Leitung nach Anspruch 1, wobei das äußere Rohr (11) in ein polymeres Material eingebettete Kohlefasern umfasst.

3. Leitung nach Anspruch 2, wobei:

   - die Kohlefasern der Heizschicht (3) in einem bestimmten ersten Winkel, der geeignet ist, einen elektrischen Widerstand der Heizschicht (3) zu erhalten, um das innere Rohr (2) gewickelt sind, und
   - die Kohlefasern des äußeren Rohrs (11) in zumindest einem bestimmten zweiten Winkel, der geeignet ist, einen mechanischen Widerstand des äußeren Rohrs (11) zu erhalten, um das innere Rohr (2) gewickelt sind.

4. Leitung nach einem der vorangehenden Ansprüche, wobei die Beabstandungsmittel (10a) einen in ein polymeres Material eingebetteten Verstärkungsfüllstoff umfassen, wobei die Beabstandungsmittel am inneren Rohr (2) und der Heizschicht (3) ausgebildet sind.

5. Leitung nach einem der vorangehenden Ansprüche, wobei die Stromversorgungsmittel (6) ein Verbindungselement (6b) umfassen, das mit zumindest einer im Wesentlichen transversalen oder teilweise geneigten Kontaktfläche, die sich in der Längsrichtung (X) in der Nähe eines Endes der Heizschicht (3) befindet, in Kontakt kommt.

6. Verfahren zur Herstellung einer Leitung für den Transport eines Fluids, das einen Kohlenwasserstoff umfasst, wobei die Leitung ein hohles inneres Rohr (2) umfasst, das sich entlang einer Längsrichtung (X) erstreckt und dazu dient, das Fluid im Rohr zu transportieren, wobei das innere Rohr (2) zumindest eine elektrisch isolierende Außenfläche (2b) umfasst, wobei das Verfahren zumindest die folgenden Schritte umfasst:

   - Ausbildung einer Heizschicht (3) am inneren Rohr, wobei die Heizschicht (3) in ein polymeres Material eingebettete Kohlefasern umfasst,
   - Anordnung einer thermisch isolierenden Schicht (10) um die Heizschicht (3),
   - Anordnung von Beabstandungsmitteln (10a),
   - Anordnung eines äußeren Rohrs (11) um die thermisch isolierende Schicht (10), wobei das äußere Rohr (11) geeignet ist, einem Außendruck von zumindest mehr als 100 bar standzuhalten, und wobei die Beabstandungsmittel zwischen dem inneren Rohr (2) und dem äußeren Rohr (11) angeordnet sind, um das äußere Rohr (11) fest in einem Abstand zum inneren Rohr (2) zu halten, und
- Anordnung von Stromversorgungsmitteln (6) zur Zuführung von elektrischem Strom zur Heizschicht (3), wobei der elektrische Strom in der Heizschicht fließt, um das innere Rohr zu erhitzen.

7. Verfahren nach Anspruch 6, wobei die Ausbildung der Heizschicht (3) ausgeführt wird, indem Kohlefasern in einem bestimmten ersten Winkel, der geeignet ist, einen elektrischen Widerstand der Heizschicht (3) zu erhalten, um das innere Rohr (2) gewickelt werden.

8. Verfahren nach einem der Ansprüche 6 bis 7, wobei die Beabstandungsmittel (10a) einen in ein polymeres Material eingebetteten Verstärkungsfüllstoff umfassen und die Beabstandungsmittel nach der Ausbildung der Heizschicht (3) direkt am inneren Rohr (2) und der Heizschicht (3) ausgebildet werden.

9. Verfahren nach einem der Ansprüche 6 bis 8, wobei das äußere Rohr (11) direkt an den Beabstandungsmitteln (10a) aus in ein polymeres Material eingebetteten Kohlefasern ausgebildet wird.

10. Verfahren nach einem der Ansprüche 6 bis 9, wobei das äußere Rohr (11) ausgebildet wird, indem Kohlefasern in zumindest einem bestimmten zweiten Winkel, der geeignet ist, einen mechanischen Widerstand des äußeren Rohrs (11) zu erhalten, um die Beabstandungsmittel (10a) und die thermisch isolierende Schicht (10) gewickelt werden.

**Claims**

1. Line for transporting a fluid containing a hydrocarbon, said line comprising:

   - a hollow inner tube (2) extending in a longitudinal direction (X) and intended for transporting said fluid in the inner tube,
   - a heating layer (3) on the inner tube, and comprising carbon fibers,
   - a heat insulation layer (10) around the heating layer (3),
   - an outer tube (11) around the heat insulation layer (10),
   - electrical power supply means (6) intended to bring an electrical current to said heating layer (3), said electrical current flowing in said heating layer to heat the inner tube,

   said line being **characterized in that** spacing means (10a) are placed between the inner tube (2) and the outer tube (11) to securely hold the outer tube (11) at a distance from the inner tube (2), **in that** said inner tube (2) has at least one electrically insulating outer surface (2b), said carbon fibers are embedded in a polymer material, and **in that** said outer tube (11) is suitable to withstand an external pressure at least greater than 100 bar.

2. Line according to Claim 1, wherein the outer tube (11) comprises carbon fibers embedded in a polymer material.

3. Line according to Claim 2, wherein:

   - the carbon fibers of the heating layer (3) are wound around the inner tube (2) with a first predetermined angle suitable to obtain an electrical resistance of said heating layer (3), and
   - the carbon fibers of the outer tube (11) are wound around the inner tube (2) with at least a second predetermined angle suitable to obtain a mechanical strength of said outer tube (11).

4. Line according to any of the preceding claims, wherein the spacing means (10a) comprise a reinforcing filler embedded in a polymer material, said spacing means being formed on the inner tube (2) and the heating layer (3).

5. Line according to any of the preceding claims, wherein the electrical power supply means (6) comprise a connection element (6b) coming into contact with at least one substantially transverse or partially angled contact surface located in proximity to one end of the heating layer (3) in the longitudinal direction (X).

6. Method for producing a line for the transport of a fluid containing a hydrocarbon, said line comprising a hollow inner tube (2) extending in a longitudinal direction (X) and intended for transporting said fluid in the tube, said inner tube (2) having at least one electrically insulating outer surface (2b), said method comprising at least the following steps:

   - formation of a heating layer (3) on the inner tube, said heating layer (3) comprising carbon fibers embedded in a polymer material,
   - placement of a heat insulation layer (10) around the heating layer (3),
   - placement of spacing means (10a),
   - placement of an outer tube (11) around the heat insulation layer (10), said outer tube (11) being suitable to withstand an external pressure at least greater than 100 bar, and said spacing means being placed between the inner tube (2) and the outer tube (11) to securely hold the outer tube (11) at a distance from the inner tube (2), and

- placement of electrical power supply means (6) for bringing an electrical current to said heating layer (3), said electrical current flowing in said heating layer to heat the inner tube.

7.  Method according to Claim 6, wherein the formation of the heating layer (3) is achieved by winding carbon fibers around the inner tube (2) at a first predetermined angle suitable to obtain an electrical resistance of said heating layer (3).

8.  Method according to either of Claims 6 or 7, wherein the spacing means (10a) comprise a reinforcing filler embedded in a polymer material, and said spacing means are formed directly on the inner tube (2) and the heating layer (3) after the formation of the heating layer (3).

9.  Method according of any of Claims 6 to 8, wherein the outer tube (11) is formed from carbon fibers embedded in a polymer material, directly on the spacing means (10a).

10.  Method according to any of Claims 6 to 9, wherein the outer tube (11) is formed by winding carbon fibers around the spacing means (10a) and the heat insulation layer (10) with at least a second predetermined angle suitable to obtain a mechanical strength of said outer tube (11).

FIG.1a.

FIG.1b.

FIG.2.

EP 2 558 761 B1

FIG.3.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 2436761 Y
- CN 201354918 Y

- FR 2873952